(19) Europäisches Patentamt / European Patent Office / Office européen des brevets

(11) **EP 3 947 931 B1**

(12) **EUROPÄISCHE PATENTSCHRIFT**

(45) Veröffentlichungstag und Bekanntmachung des Hinweises auf die Patenterteilung:
**22.01.2025   Patentblatt 2025/04**

(21) Anmeldenummer: **20712504.8**

(22) Anmeldetag: **16.03.2020**

(51) Internationale Patentklassifikation (IPC):
**F01N 5/02** (2006.01)

(52) Gemeinsame Patentklassifikation (CPC):
**F01N 5/02;** F01N 3/2066; F01N 2240/02;
F01N 2260/024; F01N 2610/02; F01N 2610/11;
Y02A 50/20; Y02T 10/12

(86) Internationale Anmeldenummer:
**PCT/EP2020/057050**

(87) Internationale Veröffentlichungsnummer:
**WO 2020/200718 (08.10.2020 Gazette 2020/41)**

(54) **VORRICHTUNG UND VERFAHREN ZUM KÜHLEN EINER ABGASNACHBEHANDLUNGSEINRICHTUNG**

DEVICE AND METHOD FOR COOLING AN EXHAUST GAS AFTERTREATMENT APPARATUS

DISPOSITIF ET PROCÉDÉ DE REFROIDISSEMENT D'UNE INSTALLATION DE POST-TRAITEMENT DES GAZ D'ÉCHAPPEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.04.2019   DE 102019108729**

(43) Veröffentlichungstag der Anmeldung:
**09.02.2022   Patentblatt 2022/06**

(73) Patentinhaber: **MAN Truck & Bus SE**
**80995 München (DE)**

(72) Erfinder:
• **HEINDL, Thomas Martin**
**80995 München (DE)**
• **PÜSCHEL, Maximilian**
**80995 München (DE)**
• **ZIPPEL, Markus**
**80995 München (DE)**

(74) Vertreter: **v. Bezold & Partner Patentanwälte - PartG mbB**
**Ridlerstraße 57**
**80339 München (DE)**

(56) Entgegenhaltungen:
DE-A1- 102012 206 563      DE-A1- 102014 221 655
DE-U1- 202019 106 555

**Beschreibung**

Die Erfindung betrifft eine Vorrichtung und ein Verfahren zum Kühlen einer Abgasnachbehandlungseinrichtung, vorzugsweise einer Additiv-Dosiereinrichtung.

Zur Reduzierung der Stickoxidemissionen von Verbrennungskraftmaschinen können sogenannte SCR-Systeme (engl.: selective catalytic reduction) verwendet werden. Bei diesen Systemen kann über ein Dosiersystem ein Reduktionsmittel (z. B. eine wässrige Harnstofflösung) dem Abgas zugeführt werden, mit dem in einem nachfolgenden Prozess die Stickoxide in ungiftige Verbindungen umgewandelt werden können. Je nach Ausführung des SCR-Systems befinden sich temperaturempfindliche Komponenten direkt auf Bauteilen, die heißes Abgas führen. Um eine Überhitzung dieser Komponenten zu vermeiden, müssen sie gekühlt werden. Dies kann beispielsweise durch einen Anschluss an einen Kühlmittelkreislauf, z. B. der Verbrennungskraftmaschine, erfolgen.

Die Umwälzung des Kühlmittels im Kühlmittelkreislauf kann bei laufender Verbrennungskraftmaschine durch die Kühlmittelpumpe der Verbrennungskraftmaschine erfolgen. Nach dem Abschalten der Verbrennungskraftmaschine kommt es zu einem unter Umständen lange anhaltendem "Nachheizen" mit einem starken Wärmeübergang von den Abgaskomponenten in die dort verbauten SCR-Komponenten. Um Bauteilschäden und Lebensdauerreduzierungen zu vermeiden, müssen die SCR-Komponenten bei Bedarf auch nach dem Abstellen während des "Nachheizens" in irgendeiner Form gekühlt werden.

DE 10 2014 221 655 A1 offenbart ein Dosiermodul zum Einbringen eines Betriebsstoffes in eine Leitung, wobei das Dosiermodul mit einem Kühlmittelkreislauf zur bedarfsweisen Kühlung zumindest eines Teils des Dosiermoduls verschaltet ist, und wobei eine Durchflusssteuerungseinrichtung in dem Kühlmittelkreislauf angeordnet ist. Die Durchflusssteuerungseinrichtung ist eine den Kühlmittelzufluss in das Dosiermodul und den Kühlmittelabfluss aus dem Dosiermodul beherrschende Ventileinrichtung, die aus einem eingangsseitig in das Dosiermodul verbauten Ventil und einem ausgangsseitig aus dem Dosiermodul verbauten Ventil besteht. In einem Abstellfall wird eine Zwangsdurchströmung des Dosiermoduls mit Kühlmittel sichergestellt, nachdem es in der Kühlmittelführungsleitung zur Verdampfung des Kühlmittels und dadurch zu einem Druckanstieg kommt, wodurch das Kühlmittel durch das Ventil im Ablauf entweicht und nachfolgend bei einem Druckabfall neues Kühlwasser durch das Ventil in die Kühlmittelführungsleitung eingesaugt wird.

Nachteilig an dem aus der DE 10 2014 221 655 A1 bekannten System kann sein, dass die Kühlung nur unzureichend ist. Es kann sein, dass unter bestimmten Randbedingungen die Kühlmitteltemperatur und damit auch der Druck stetig ansteigen und kein Druckabfall mehr einsetzt, bevor die zulässigen Bauteiltemperaturen überschritten sind. Es stellt sich kein kontinuierlicher Kühlmitteldurchfluss ein.

Der Erfindung liegt daher die Aufgabe zu Grunde, eine alternative und/oder verbesserte Technik zum Kühlen einer Abgasnachbehandlungsvorrichtung zu schaffen.

Die Aufgabe wird gelöst durch die Merkmale der unabhängigen Ansprüche. Vorteilhafte Weiterbildungen sind in den abhängigen Ansprüchen und der Beschreibung angegeben.

Die Erfindung schafft eine Vorrichtung zum Kühlen einer Abgasnachbehandlungseinrichtung (z. B. SCR-Abgasnachbehandlungseinrichtung), vorzugsweise einer Additiv- Dosiereinrichtung (z. B. Reduktionsmittel-Dosiereinrichtung (z. B. Reduktionsmittel-Injektor)). Die Vorrichtung weist einen Kühlmittelkreislauf zum Führen eines Kühlmittels auf. Der Kühlmittelkreislauf weist einen Kühlbereich (z. B. aufweisend eine Kühlwendel und/oder einen Wärmeübertrager) zur Wärmeübertragung mit der Abgasnachbehandlungseinrichtung auf. Der Kühlmittelkreislauf weist mindestens einen, nämlich mindestens zwei, Rückflussverhinderer, vorzugsweise Rückschlagventile, auf. Ein erster Rückflussverhinderer ist stromaufwärts des Kühlbereichs angeordnet. Ein zweiter Rückflussverhinderer ist stromabwärts des Kühlbereichs angeordnet. Der Kühlmittelkreislauf weist einen Abkühlstrecken-Abschnitt zwischen dem Kühlbereich und dem zweiten Rückflussverhinderer auf. Der zweite Rückflussverhinderer ist so ausgebildet und/oder ausgerichtet, dass er (z. B. bereits) bei einer Volumenänderung (z. B. ohne Phasenwechsel des Kühlmittels und/oder eine periodischen Volumenänderung mit abwechselnder Volumenzunahme und Volumenabnahme) des Kühlmittels im Kühlbereich (und optional in einem, z. B. Leitungs-, Abschnitt, vorzugsweise dem Abkühlstrecken-Abschnitt, des Kühlmittelkreislaufs zwischen dem Kühlbereich und dem mindestens einen Rückflussverhinderer) öffnet, die unterhalb von einer Siedetemperatur des Kühlmittels stattfindet. Vorzugsweise kann so ein zweckmäßig kontinuierlicher oder quasi-kontinuierlichen Naturumlauf des Kühlmittels im Kühlmittelkreislauf unterhalb der Siedetemperatur des Kühlmittels bereitgestellt werden.

Die Vorrichtung kann eine Kühlung der Abgasnachbehandlungseinrichtung mit Kühlmittel, z. B. Motorkühlwasser, nach dem Abstellen einer Kühlmittelpumpe des Kühlmittelkreislaufs ermöglichen. Die Vorrichtung kann unabhängig von einer Leitungsverlegung und kostengünstig realisiert werden. Eine Umwälzung von Kühlmittel kann beispielsweise allein durch eine Temperaturdifferenz zwischen der Abgasnachbehandlungseinrichtung / dem Kühlbereich und einem stromabwärts angeordneten (Leitungs-) Abschnitt des Kühlmittelkreislaufs gewährleistet werden. Die Umwälzung ist dabei nicht davon abhängig, dass das Kühlmittel im Kühlbereich siedet. Stattdessen kann die Umwälzung bereits in einem Temperaturbereich stattfinden, der unterhalb von einer Siedetemperatur des Kühlmittels liegt. Die in diesem Temperaturbereich bereits stattfindenden Volumenänderungen des Kühlmittels können ausreichen, um die Umwälzung des Kühlmittels durch Rückflussverhinderer mit zweckmäßig daran angepassten Öffnungsdrücken zu ermöglichen. Im Einzelnen kann bspw. eine Volumenzunahme des Kühlmittels im Kühlbereich dazu führen, dass Kühlmittel in den Abschnitt stromabwärts des Kühlbereichs ausgeschoben wird und dabei zweckmäßig einen Rückflussverhinderer passiert. Ein Rückflussverhinderer im Abschnitt stromaufwärts des Kühlbereichs verhindert derweil, dass das Kühlmittel stromaufwärts gedrückt wird. Das Kühlmittel kann ferner im Abschnitt stromabwärts des Kühlbereichs abkühlen. Es kommt wieder zu einer Volumenabnahme, die für ein Nachsaugen von Kühlmittel aus dem Abschnitt stromaufwärts des Kühlbereichs sorgt.

Der mindestens eine Rückflussverhinderer weist einen zweckmäßig ersten Rückflussverhinderer auf, vorzugsweise Rückschlagventil, der stromaufwärts des Kühlbereichs angeordnet ist. Der mindestens eine Rückflussverhinderer weist einen zweckmäßig zweiten Rückflussverhinderer, vorzugsweise Rückschlagventil, der stromabwärts des Kühlbereichs angeordnet ist, vorzugsweise beabstandet zu dem Kühlbereich, auf. Der Kühlmittelkreislauf weist einen Abkühlstrecken-Abschnitt zwischen dem Kühlbereich und dem zweiten Rückflussverhinderer auf. Der erste Rückflussverhinderer kann ermöglichen, dass Kühlmittel nachströmen kann, jedoch das Kühlmittel nicht zurück in den Vorlauf geschoben werden kann. Der zweite Rückflussverhinderer kann ermöglichen, dass Kühlmittel abgeführt werden kann, jedoch das Kühlmittel nicht zurück aus dem Rücklauf angesaugt wird. Die beabstandete Anordnung des zweiten Rückflussverhinderers kann dazu führen, dass der Abschnitt des Kühlmittelkreislaufs zwischen dem Kühlbereich und dem zweiten Rückflussverhinderer als eine Abkühlstrecke dienen kann. In diesem kann zuvor im Kühlbereich erwärmtes Kühlmittel abkühlen, dabei ein Kühlmittelvolumen verringern und somit ein Nachsaugen von Kühlmittel aus dem Vorlauf bewirken.

Der erste Rückflussverhinderer und/oder der zweite Rückflussverhinderer sind dazu ausgebildet, einen Öffnungsdruck zum Öffnen des Rückflussverhinderers kleiner oder gleich 10 mbar, vorzugsweise kleiner oder gleich 1 mbar, besonders bevorzugt kleiner oder gleich 0,1 mbar oder 0,05 mbar, aufzuweisen. Alternativ oder zusätzlich ist der erste Rückflussverhinderer und/oder der zweite Rückflussverhinderer dazu ausgebildet, einen Öffnungsdruck aufzuweisen, der zum Öffnen des Rückflussverhinderers führt, wenn das Kühlmittel eine Volumenänderung erfährt, die unterhalb von der Siedetemperatur des Kühlmittels stattfindet. Der geringe Öffnungsdruck ermöglicht, dass das Kühlmittel die Rückflussverhinderer bereits bei Volumenänderungen des Kühlmittels passieren kann, die unterhalb von einer Siedetemperatur des Kühlmittel stattfinden.

Es ist auch möglich, dass der erste Rückflussverhinderer und/oder der zweite Rückflussverhinderer dazu ausgebildet ist, bei einer, vorzugsweise geringfügigen, Fluidströmung, die durch eine Volumenänderung des Kühlmittels unterhalb der Siedetemperatur bewirkt wird, offengehalten zu werden.

In einem weiteren Ausführungsbeispiel ist der erste Rückflussverhinderer und/oder der zweite Rückflussverhinderer in einer aufsteigenden, vorzugsweise vertikalen oder annähernd vertikalen, Einbaulage ausgerichtet. Dies kann den Vorteil haben, dass der Rückflussverhinderer, zum Beispiel in Form eines Kugel-Rückschlagventils oder eines Klappen-Rückschlagventils, lediglich durch die Schwerkraft in der Schließstellung gehalten ist. Der Rückflussverhinderer kann somit einen vergleichsweise geringen Öffnungsdruck aufweisen. Der geringe Öffnungsdruck kann ermöglichen, dass der Rückflussverhinderer bereits bei Volumenänderungen des Kühlmittels öffnet, die unterhalb von einer Siedetemperatur des Kühlmittels stattfinden.

In einer Ausführungsform ist der erste Rückflussverhinderer und/oder der zweite Rückflussverhinderer einzig oder im Wesentlichen nur durch eine Gewichtskraft eines Verschlusselements (z. B. Verschlusskugel oder Verschlussklappe) des Rückflussverhinderers in einer Schließstellung gehalten. Bei einer geringen Masse des Verschlusselements kann somit ein vergleichsweise geringer Öffnungsdruck für den Rückflussverhinderer erzielt werden. So kann ermöglicht werden, dass der Rückflussverhinderer bereits bei Volumenänderungen des Kühlmittels öffnet, die unterhalb von einer Siedetemperatur des Kühlmittels stattfinden.

In einer weiteren Ausführungsform ist der erste Rückflussverhinderer und/oder der zweite Rückflussverhinderer nicht-federbelastet. Durch das Weglassen einer Federvorspannung für ein Verschlusselement des Rückflussverhinderers kann ebenfalls ein vergleichsweise geringer Öffnungsdruck des Rückflussverhinderers erzielt werden. Erneut kann der geringe Öffnungsdruck ermöglichen, dass der Rückflussverhinderer bereits bei Volumenänderungen des Kühlmittels öffnet, die unterhalb von einer Siedetemperatur des Kühlmittels stattfinden.

In einer Ausführungsvariante ist der erste Rückflussverhinderer und/oder der zweite Rückflussverhinderer ein Kugel-Ruckschlagventil. Vorzugsweise kann das Kugel-Rückschlagventil in einer aufsteigenden, vorzugsweise vertikalen oder annähernd vertikalen, Einbaulage ausgerichtet sein, nicht-federbelastet sein und/oder einzig oder im Wesentlichen nur durch eine Gewichtskraft einer Verschlusskugel des Kugel-Rückschlagventils in einer Schließstellung gehalten sein.

In einer weiteren Ausführungsvariante ist der erste Rückflussverhinderer und/oder der zweite Rückflussverhinderer ein Klappen-Rückschlagventil. Vorzugsweise kann das Klappen-Rückschlagventil in einer horizontalen Einbaulage oder in einer annähernd horizontalen Einbaulage ausgerichtet sein, nicht-federbelastet sein und/oder einzig oder im Wesentlichen nur durch eine Gewichtskraft einer Rückschlagklappe des Klappen-Rückschlagventils in einer Schließstellung gehalten sein.

In einem Ausführungsbeispiel kann ein Abschnitt des Kühlmittelkreislaufs, vorzugsweise direkt, stromabwärts des Kühlbereichs aufsteigend, annähernd vertikal oder vertikal ausgerichtet sein, vorzugsweise zum Ausbilden einer Dampfblasenpumpe (Mammutpumpe).

Zweckmäßig kann der Kühlbereich zum Kühlen der Abgasnachbehandlungseinrichtung ausgebildet und/oder anordenbar sein.

Vorzugsweise kann der Kühlmittelkreislauf eine Kühlmittelpumpe (z. B. Verbrennungskraftmaschinen-Kühlmittelpumpe) aufweisen. Somit kann im Normalbetrieb die Kühlmittelpumpe zum Fördern des Kühlmittels verwendet werden. Nach dem Abschalten der Kühlmittelpumpe kann dann mittels Naturumlauf durch die hierin offenbarte Vorrichtung eine Umwälzung des Kühlmittels erzielt werden.

Es ist möglich, dass der Kühlmittelkreislauf ein Verbrennungskraftmaschinen-Kühlmittelkreislauf ist oder zumindest ein Teil davon. Das Kühlmittel kann ein Verbrennungskraftmaschinen-Kühlmittel sein (z. B. Motor-Kühlwasser). Alternativ kann bspw. auch das Additiv als das Kühlmittel verwendet werden.

Die Erfindung betrifft auch ein Kraftfahrzeug, vorzugsweise ein Nutzfahrzeug (zum Beispiel Lastkraftwagen oder Omnibus). Das Kraftfahrzeug weist eine Abgasnachbehandlungseinrichtung (zum Beispiel SCR-Abgasnachbehandlungseinrichtung), vorzugsweise eine Additiv-Dosiereinrichtung (z. B. Reduktionsmittel-Dosiereinrichtung), auf. Das Kraftfahrzeug weist ferner eine Vorrichtung zum Kühlen der Abgasnachbehandlungseinrichtung wie hierin offenbart auf.

Es ist auch möglich, die Vorrichtung wie hierin offenbart für Personenkraftwagen, Großmotoren, geländegängige Fahrzeuge, stationäre Motoren, Marinemotoren usw. zu verwenden.

Die Erfindung betrifft auch ein Verfahren zum Kühlen einer Abgasnachbehandlungseinrichtung (zum Beispiel SCR-Abgasnachbehandlungseinrichtung), vorzugsweise einer Additiv-Dosiereinrichtung (z. B. Reduktionsmittel-Dosiereinrichtung (z. B. Reduktionsmittel-Injektor)). Das Verfahren weist ein Kühlen der Abgasnachbehandlungseinrichtung durch einen Kühlbereich eines Kühlmittelkreislaufs auf, zweckmäßig durch Wärmeübertragung von der Abgasnachbehandlungseinrichtung zu dem Kühlmittel im Kühlbereich. Das Verfahren weist ferner ein Fördern von Kühlmittel durch den Kühlmittelkreislauf in einem Naturumlauf auf, der bereits durch eine Volumenänderung (z. B. ohne Phasenwechsel) des Kühlmittels in dem Kühlbereich unterhalb von einer Siedetemperatur des Kühlmittels bewirkt wird, vorzugsweise nachdem eine Kühlmittelpumpe des Kühlmittelkreislaufs abgeschaltet wurde. Mit dem Verfahren können die gleichen Vorteile wie mit der hierin offenbarten Vorrichtung zum Kühlen eine Abgasnachbehandlungseinrichtung erzielt werden.

In einem Ausführungsbeispiel ist das Fördern kontinuierlich oder quasi-kontinuierlich.

In einem weiteren Ausführungsbeispiel wird der Naturumlauf zusätzlich durch eine Volumenänderung des Kühlmittels in einem Abschnitt des Kühlmittelkreislaufes, vorzugsweise direkt, stromaufwärts des Kühlbereichs und/oder in einem Abschnitt des Kühlmittelkreislaufes, vorzugsweise direkt, stromabwärts des Kühlbereichs bewirkt. Vorzugsweise kann der Abschnitt des Kühlmittelkreislaufes stromaufwärts des Kühlbereichs durch einen Rückflussverhinderer begrenzt sein. Es ist auch möglich, dass der Abschnitt des Kühlmittelkreislaufes stromabwärts des Kühlbereichs durch einen Rückflussverhinderer begrenzt ist.

In einer Ausführungsform ist die Volumenänderung des Kühlmittels eine periodische Volumenänderung, vorzugsweise mit sich abwechselnder Volumenzunahme, bevorzugt im Kühlbereich durch eine Wärmezufuhr von der Abgasnachbehandlungseinrichtung, und Volumenabnahme, bevorzugt in einem Abschnitt des Kühlmittelkreislaufs stromabwärts des Kühlbereichs durch eine Wärmeabfuhr an die Umgebung.

In einer weiteren Ausführungsform wird ein Nachströmen von Kühlmittel zum Kühlbereich durch ein Abkühlen und eine damit verbundene Volumenabnahme des Kühlmittels in einem Abschnitt des Kühlmittelkreislaufs stromabwärts des Kühlbereichs bewirkt.

Das Verfahren verwendet die Vorrichtung zum Kühlen eine Abgasnachbehandlungseinrichtung wie hierin offenbart.

Die hierin offenbarte Vorrichtung und das hierin offenbarte Verfahren kann auch Vorteile gegenüber anderen Lösungsmöglichkeiten bieten, jedoch auch mit diesen kombiniert werden. Bspw. kann auf eine zusätzliche elektrische Kühlmittelpumpe im Kühlmittelkreislauf verzichtet werden, wenn gewünscht. Die zusätzliche elektrische Kühlmittelpumpe kann bspw. nach dem Abschalten der Verbrennungskraftmaschine und der Brennkraftmaschinen-Kühlmittelpumpe über eine Nachlaufzeit auch nach dem Abschalten der Verbrennungskraftmaschine ein Kühlmittel im Kühlreislauf umwälzen. Durch den möglichen Verzicht können bspw. Kosten für die zusätzliche Kühlmittelpumpe und Energie zum Antreiben der zusätzlichen Kühlmittelpumpe eingespart werden. Es kann auch auf eine stetig steigende Leistungsverlegung verzichtet werden, wenn gewünscht. Bei einer Leitungsverlegung, die stetig steigend von der Abgasnachbehandlungseinrichtung zu einem Kühlmittelausgleichsbehälter oder Motorblock führt, stellt sich durch die deutlich höhere Temperatur in der Abgasnachbehandlungseinrichtung ein Thermosiphoneffekt ein. Dabei wird durch die Dichteänderung, die durch die Erwärmung und Verdampfung des Kühlmittels hervorgerufen wird, Kühlmittel umgewälzt. Diese kostengünstige Variante kann aber ggf. aufgrund der Platzverhältnisse und Einbausituationen nur schwer oder selten realisierbar sein. Es kann auch auf ein Kühlmittelreservoir nahe und oberhalb der Abgasnachbehandlungseinrichtung verzichtet werden, wenn gewünscht. Das Kühlmittelreservoir kann beim Sieden von Kühlmittel für ein schnelleres Kondensieren der Dampfblasen und ein Nachlaufen von Kühlmittel sorgen. Da aber aufgrund von Umwälzungen von Kühlmittel im restlichen Kühlmittelkreislauf, ggf. in der heißen stehenden Brennkraftmaschine die Strömungsrichtung an der Abgasnachbehandlungseinrichtung nicht vorhersehbar sein kann, ist es möglich, dass das Nachlaufen nicht immer sichergestellt ist. Zudem kann die Funktion stark von der Einbaulage und Fahrzeugneigung abhängig sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:

Figur 1    eine schematische Abbildung einer beispielhaften Vorrichtung zum Kühlen einer Abgasnachbehandlungseinrichtung gemäß der vorliegenden Offenbarung; und

Figur 2    eine schematische Abbildung zum Aufzeigen von thermodynamischen Zusammenhängen, die von dem Verfahren und der Vorrichtung zum Kühlen einer Abgasnachbehandlungseinrichtung gemäß der vorliegenden Offenbarung genutzt werden können.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

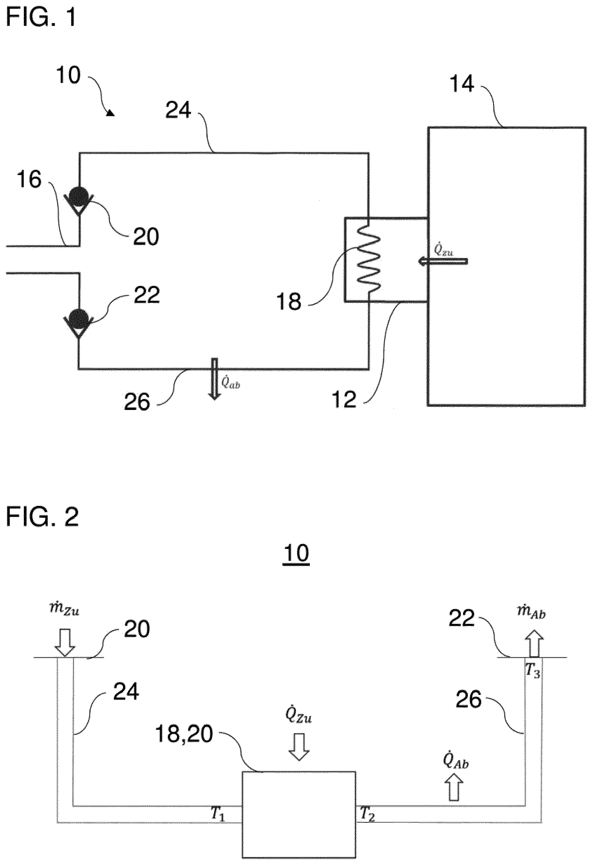

Die Figur 1 zeigt eine beispielhafte Vorrichtung 10 zum Kühlen einer Abgasnachbehandlungseinrichtung 12. Die Abgasnachbehandlungseinrichtung 12 kann zweckmäßig eine Dosiereinrichtung, zum Beispiel ein Injektor, zum Zuführen eines Reduktionsmittels in einen Abgasstrang 14 einer Verbrennungskraftmaschine sein. Die Vorrichtung 10, die Abgasnachbehandlungseinrichtung 12 und der Abgasstrang 14 können in einer Verbrennungskraftmaschine (z. B. Diesel-Brennkraftmaschine) umfasst sein. Die Verbrennungskraftmaschine kann zweckmäßig in einem Kraftfahrzeug, vorzugsweise einem Nutzfahrzeug (zum Beispiel Lastkraftwagen oder Omnibus), zum Antreiben des Kraftfahrzeugs umfasst sein.

Beispielsweise kann mittels der Dosiereinrichtung eine (zum Beispiel wässrige) Harnstofflösung in einen im Abgasstrang 14 strömenden Abgasstrom eingespritzt werden. Die Dosiereinrichtung kann Teil einer SCR-Katalysatoreinrichtung sein, die zusätzlich einen SCR Katalysator im Abgasstrang 14 stromabwärts der Dosiereinrichtung aufweist. Mittels der SCR-Katalysatoreinrichtung können zweckmäßig Stickoxide im Abgasstrom reduziert werden. Die Dosiereinrichtung kann bspw. durch eine elektronische Steuereinheit betätigt werden.

Die Vorrichtung 10 umfasst einen Kühlmittelkreislauf 16 mit einem Kühlbereich 18. Der Kühlmittelkreislauf 16 kann beispielsweise an einem Kühlmittelkreislauf zum Kühlen der Verbrennungskraftmaschine angeschlossen sein. Der Kühlmittelkreislauf 16 kann eine Kühlmittelpumpe (nicht dargestellt), zum Beispiel eine Kühlmittelpumpe der Verbrennungskraftmaschine, aufweisen. Während des Betriebs der Verbrennungskraftmaschine kann die Kühlmittelpumpe betrieben werden. Durch den Betrieb der Kühlmittelpumpe wird ein Kühlmittel (zum Beispiel Kühlwasser) durch den Kühlmittelkreislauf 16 gepumpt. Der mit Kühlmittel durchströmte Kühlbereich 18 kühlt die Abgasnachbehandlungseinrichtung 12. Der Kühlbereich 18 kann beispielsweise als eine Kühlwendel oder ein Wärmeübertrager ausgebildet sein.

Nach dem Abschalten der Kühlmittelpumpe, zum Beispiel durch Abschalten der Verbrennungskraftmaschine, wird kein Kühlmittel mehr aktiv durch den Kühlmittelkreislauf 16 gepumpt. Dennoch kann es vorkommen, dass noch heiße Komponenten (z. B. Rohre usw.) des Abgasstrangs 14 die Abgasnachbehandlungseinrichtung 12 weiter aufheizen (siehe Figur 1: $\dot{Q}$_zu). Dies kann zu Bauteilschäden und Lebensdauerreduzierungen der Abgasnachbehandlungseinrichtung 12 führen. Nachfolgend ist erläutert, dass die Vorrichtung 10 einen oder mehrere Rückflussverhinderer aufweist, um in Situationen mit abgeschalteter Kühlmittelpumpe eine Kühlung der Abgasnachbehandlungseinrichtung 12 zu ermöglichen.

Die Vorrichtung 10 weist als einen ersten Rückflussverhinderer ein erstes Rückschlagventil 20 und als einen zweiten Rückflussverhinderer ein zweites Rückschlagventil 22 auf. Das erste Rückschlagventil 20 ist stromaufwärts des Kühlbereichs 18 angeordnet. Damit ist das erste Rückschlagventil 20 in einem Vorlauf zu dem Kühlbereich 18 angeordnet. Der Leitungsabschnitt zwischen dem ersten Rückschlagventil 20 und dem Kühlbereich 18 ist hierin auch als erster Abschnitt 24 des Kühlmittelkreislaufs 16 bezeichnet. Das zweite Rückschlagventil 22 ist stromabwärts des Kühlbereichs 18 angeordnet. Damit ist das zweite Rückschlagventil 22 in einem Rücklauf bezüglich des Kühlbereichs 18 angeordnet. Der Leitungsabschnitt zwischen dem Kühlbereich 18 und dem zweiten Rückschlagventil 22 ist hierin auch als zweiter Abschnitt 26 des Kühlmittelkreislaufs 16 bezeichnet.

Die Rückschlagventile 20, 22 sind so ausgebildet und ausgerichtet, dass sie schon bei sehr geringen Öffnungsdrücken öffnen. Vorzugsweise öffnen sich die Rückschlagventile 20, 22 (oder allgemein der mindestens eine Rückflussverhinderer) bereits bei einem Öffnungsdruck kleiner oder gleich 10 mbar, vorzugsweise kleiner oder gleich 1 mbar, besonders bevorzugt kleiner oder gleich 0,1 mbar oder 0,05 mbar. Der Öffnungsdruck muss zweckmäßig so gering sein, dass der Rückflussverhinderer auch schon durch eine minimale Strömung offen gehalten werden kann.

Der geringe Öffnungsdruck der Rückschlagventile 20, 22 kann im Ausführungsbeispiel von Figur 1 dadurch erreicht werden, dass die Rückschlagventile 20, 22 nicht-federbelastete Kugel-Rückschlagventile in einer vertikalen Einbaulage sind. Damit werden die Rückschlagventile 20, 22 lediglich durch eine Gewichtskraft einer Verschlusskugel der Rückschlagventile 20, 22 in einer Schließstellung gehalten. Hierbei wird nicht die gesamte Gewichtskraft der Verschlusskugel zum Verschließen, sondern lediglich derjenige Anteil, der nicht durch einen Auftrieb der Verschlusskugel im Kühlmittel kompensiert wird. Eine geringe Gewichtskraft der Kugel kann durch eine geringe Masse der Kugel bereitgestellt werden. Beispielsweise kann die Kugel aus einem Kunststoffmaterial, z. B. Nylon, hergestellt sein. Kugel-Rückschlagventile können zudem den Vorteil aufweisen, dass sie einen nur sehr geringen Strömungswiderstand nach dem Öffnen darstellen.

Beispielsweise kann bei einem senkrecht ausgerichteten Kugel-Rückschlagventil ohne Federbelastung der Öffnungsdruck wie folgt berechnet werden:

$$p = \frac{2}{3} * \text{Ortsfaktor} * \frac{Durchmesser_{Kugel}^{3} \left( Dichte_{Kugel} - Dichte_{Kühlmedium} \right)}{Durchmesser_{Ventilsitz}^{2}}$$

Der Ortsfaktor ist positionsabhängig. Als Mittelwert kann der Ortsfaktor mit 9,81 m/s^2 angegeben werden.

In anderen Ausführungsbeispielen kann ein geringer Öffnungsdruck eines Rückflussverhinderers mit zusätzlichen und/oder alternativen Maßnahmen erreicht werden. Neben der rein vertikalen Ausrichtung der Rückflussverhinderer, kommen beispielsweise auch sämtliche aufsteigenden Ausrichtungen (aufsteigend vom Einlass zum Auslass des Rückschlagventils) für die Rückflussverhinderer in Betracht. Es ist beispielsweise auch denkbar, dass ein Rückschlagventil in einer horizontalen Einbaulage ausgerichtet ist und mit einer sehr geringen Vorspannung in der Schließstellung federbelastet ist. Als ein anderes Beispiel für einen Rückflussverhinderer kann ein Klappen-Rückschlagventil verwendet werden, das beispielsweise in einer horizontalen Einbaulage ausgerichtet ist und dessen Rückschlagklappe nur durch deren Gewichtskraft in der Schließstellung gehalten wird.

Dadurch, dass die Rückschlagventile 20, 22 einen sehr geringen Öffnungsdruck haben, wird ermöglicht, dass sich nach dem Abschalten der Kühlmittelpumpe des Kühlmittelkreislaufs 16 ein Naturumlauf des Kühlmittels in dem Kühlmittelkreislauf 16 einstellt, wie nachfolgend erläutert ist. Insbesondere ermöglicht der sehr geringe Öffnungsdruck, dass ein Naturumlauf bereits in einem Temperaturbereich für das Kühlmittel ermöglicht wird, der noch unterhalb einer Siedetemperatur des Kühlmittels liegt. Um einen kontinuierlichen oder zumindest einen quasi-kontinuierlichen Durchfluss durch den Kühlbereich 18 und somit einen kontinuierlichen Wärmeabtransport zu gewährleisten, können periodisch auftretende Volumenänderungen zwischen den Rückschlagventilen 20, 22 genutzt werden.

Diese werden durch Temperaturänderungen hervorgerufen, die das durchströmende Kühlmittel erfährt, oder in höheren Temperaturbereichen durch Sieden und anschließendes Kondensieren.

Beim Durchströmen des Kühlbereichs 18 wird das Kühlmittel durch die Abgasnachbehandlungseinrichtung 12 erwärmt. Das Kühlmittel dehnt sich aus. Durch das erste Rückschlagventil 20 im Vorlauf wird ein Zurückfließen des Kühlmittels verhindert. Das Kühlmittel wird durch die Volumenzunahme in die im Vergleich zur Abgasnachbehandlungseinrichtung 12 kühlere Rücklaufleitung, das heißt in den Abschnitt 26, gedrückt. Das zweite Rückschlagventil 22 öffnet sich und Kühlmittel passiert das zweite Rückschlagventil 22. In dem Abschnitt 26 kühlt das Kühlmittel wieder ab (siehe Figur 1: $\dot{Q}\_ab$). Sobald die Wärmeabgabe aus dem Abschnitt 26 an die Umgebung größer wird als der dem Kühlmittel im Kühlbereich 18 zugeführte Wärmestrom, verringert sich das Volumen und das Kühlmittel wird durch das erste Rückschlagventil 20 nachgesaugt. Das zweite Rückschlagventil 22 verhindert hierbei, dass Kühlmittel aus einem Abschnitt (Abkühlstrecken-Abschnitt) des Kühlmittelkreislaufes 16 stromabwärts des zweiten Rückschlagventils 22 gesaugt wird.

Der Naturumlauf stellt sich sowohl in einem Temperaturbereich unterhalb einer Siedetemperatur des Kühlmittels im Kühlbereich 18 als auch in einem Temperaturbereich oberhalb der Siedetemperatur des Kühlmittels im Kühlbereich 18 ein. Die den Naturumlauf bewirkenden thermodynamischen Prozesse sind dabei ähnlich. Durch den Wärmeeintrag im Kühlbereich 18 nimmt die Dichte des Kühlmittels ab. Das Volumen des Kühlmittels wird größer. Die Volumenzunahme des Kühlmittels durch die Wärmezufuhr im Kühlbereich 18 führt zum Ausschieben von Kühlmittel durch das zweite Rückschlagventil 22. Eine Volumenabnahme des Kühlmittels im zweiten Abschnitt 26 aufgrund von Abkühlung führt zum Nachströmen von Kühlmittel durch das erste Rückschlagventil 20 in den ersten Abschnitt 24. Da der Öffnungsdruck der Rückschlagventile sehr gering, vorzugsweise näherungsweise Null ist, kann die Umwälzung des Kühlmittels nur durch die (periodische) Volumenänderung hervorgerufen werden.

Einen wichtigen Einfluss darauf, dass die Förderung / der Naturumlauf des Kühlmittels nicht zum Erliegen kommt, kann der zweite Abschnitt 26 haben. Der zweite Abschnitt 26 dient als eine Abkühlstrecke zum Abkühlen des Kühlmittels mit einer damit einhergehenden Volumenabnahme des Kühlmittels. Dadurch wird Kühlmittel durch das erste Rückschlagventil 20 hindurch nachgesaugt. Der zweite Abschnitt 26 kann zweckmäßig auf die die jeweilige Einbausituation ausgelegt sein. Hierbei zu beachtende Einflussgrößen können ein Wärmeübergang vom Abgasstrang 14 auf die Abgasnachbehandlungseinrichtung 12, eine Kühlmitteltemperatur am Einlass des Kühlbereichs 18, eine Umgebungstemperatur im Bereich des zweiten Abschnitts 26, ein Kühlsystemdruck und/oder eine Kühlmittelzusammensetzung sein.

Allgemein können zwei Fälle unterschieden werden. Im ersten Fall liegt eine Temperatur der Abgasnachbehandlungseinrichtung 12 (zum Beispiel eine Innenwandtemperatur davon) unterhalb des Siedepunkts des Kühlmittels. Es entstehen keine Dampfblasen im Kühlmittel. Im zweiten Fall liegt eine Temperatur der Abgasnachbehandlungseinrichtung 12 (zum Beispiel eine Innenwandtemperatur davon) über dem Siedepunkt des Kühlmittels. Im Kühlbereich 18 entstehen Dampfblasen im Kühlmittel, die im stromabwärts angeordneten Abschnitt 26 wieder kondensieren können.

Im ersten Fall, wenn kein Sieden auftritt, kann das Kühlmittel nur durch die (periodischen) Volumenänderungen gefördert werden, die durch den Temperaturanstieg im Kühlbereich 18 und der nachfolgenden Abkühlung im Abschnitt 26 hervorgerufen werden. Damit dieser Prozess nicht zum Erliegen kommt, muss die Volumenverringerung zwischen den Rückschlagventilen während der Kontraktionsphase vom Betrag her mindestens so groß sein, wie die Volumenzunahme in diesem Bereich während der Expansionsphase.. Hier kann bspw. näherungsweise und mit Bezug zu Figur 2 gelten:

$$\Delta V_{Exp} \leq \Delta V_{Kon}$$

Nach Umformung ergibt sich

$$V_{KB} * (T_{KB}(t_2) - T_{KB}(t_0)) \leq V_{AS} * (T_{AS}(t_0) - T_{AS}(t_2))$$

mit:

$\Delta V_{Exp}$ = Volumenzunahme der Flüssigkeit zwischen den Rückschlagventilen während der Expansionsphase
$\Delta V_{Kon}$ = Volumenabnahme der Flüssigkeit zwischen den Rückschlagventilen während der Kontraktionsphase
$V_{KB}$ = Volumen des Kühlbereichs 18
$V_{AS}$ = Volumen der Abkühlstrecke 26
$T_{KB}$ = Durchschnittliche Medientemperatur im Kühlbereich 18
$T_{AS}$ = Durchschnittliche Medientemperatur in der Abkühlstrecke 26
$t_0$ = Beginn der Expansionsphase
$t_1$ = Beginn der Kontraktionsphase
$t_2$ = Ende der Kompressionsphase

Der ggf. für die Auslegung der Rückschlagventile 20, 22, des Kühlbereichs 18 und/oder der Abschnitte 24 und 26 zu berücksichtigende durchschnittlich zugeführte Wärmestrom kann unter Bezugnahme auf Figur 2 wie folgt berechnet werden:

$$\dot{Q}_{Zu} = \dot{m} * \left( c_p * (T_2 - T_1) \right)$$

mit:

$\dot{Q}\_zu$ = im Kühlbereich 18 zugeführter Wärmestrom [W]
$\dot{m}$ = zugeführter / abgeführter Massenstrom [kg/s]
$c_p$ = spezifische isobare Wärmekapazität des Kühlmittels [kJ/kgK]

Die Temperatur, die sich im Abschnitt 26 einstellt, kann im Wesentlichen abhängig von der Umgebungstemperatur im Bereich des Abschnitt 26, der Rohraußenfläche des Abschnitt 26, dem Wärmeübergangskoeffizienten des Abschnitt 26, der Strömungsgeschwindigkeit des Kühlmittels und der Strömungsart (laminar bzw. turbulent) des Kühlmittels sein.

In einer optionalen Weiterbildung der Erfindung kann im zweiten Fall, wenn die Temperaturen im Kühlbereich 18 oberhalb des Siedepunktes des Kühlmittels liegen, beispielsweise die kontinuierliche Wärmeabfuhr im Abschnitt 26 so groß sein, dass sich im Abschnitt 26 eine Temperatur einstellt, die unterhalb der Siedetemperatur des Kühlmittels liegt. Der Wärmeübergang, der sich im Abschnitt 26 einstellt, kann wie oben beschrieben beeinflusst werden. Der Abschnitt 26 kann zweckmäßig so lang sein, dass bis zum zweiten Rückschlagventil 22 die Dampfblasen zumindest teilweise, bevorzugt im Wesentlichen vollständig, kondensieren.

Sobald das Kühlmittel im Kühlbereich 18 so heiß wird, dass sich Dampfblasen bilden, kann es zu zwei Effekten kommen: Befindet sich nur noch Dampf im Kühlbereich 18 kann kaum mehr Wärme übertragen werden. Dadurch wird der abgeführte Wärmestrom deutlich größer als der zugeführte Wärmestrom und Kühlmittel kann durch das erste Rückschlagventil 20 nachlaufen. Wenn Dampfblasen in dem Abschnitt 26 wieder kondensieren, kommt es zu einer sprunghaften Volumenabnahme des Kühlmittels, wodurch ebenfalls wieder Kühlmittel durch das erste Rückschlagventil 20 hindurch nachfließt. Auf Grund dieser Effekte kommt es zu permanenten, periodischen Volumenänderungen im Bereich zwischen den beiden Rückschlagventilen 20, 22 und dadurch zu einem dauerhaften (passiven) Pumpen und Umwälzen von Kühlmittel.

Auch die Ausführung der Rückflussverhinderer kann für eine kontinuierliche oder quasi-kontinuierliche Kühlmittelumwälzung entscheidend sein. Die Umwälzung wird nur durch die Volumenänderungen bewirkt wird, die das Kühlmittel während des Durchlaufs erfährt. Damit der Kühlmittelfluss möglichst wenig unterbrochen wird, können Rückflussverhinderer mit sehr geringem Öffnungsdruck verwendet werden, wie bereits beschrieben wurde. Bspw. können als Rückflussverhinderer Kugel-Rückschlagventile oder Klappen-Rückschlagventile oder auch andere Typen von Rückflussverhinderern verwendet werden.

Unter Bezugnahme auf Figur 1 wurde hierin ein Ausführungsbeispiel beschrieben, bei dem sowohl im Vorlauf zu dem Kühlbereich 18 als auch im Rücklauf nach dem Kühlbereich 18 ein Rückflussverhinderer angeordnet ist. Es kann in einem nicht durch die Erfindung beanspruchten Ausführungsbeispiel allerdings auch möglich sein, lediglich einen Rückflussverhinderer zu verwenden und dennoch eine Förderung des Kühlmittels zu bewirken. Z. B. kann der Rückflussverhinderer (z. B. Rückschlagventil) stromaufwärts des Kühlbereichs 18 angeordnet sein. Der Abschnitt 26 stromabwärts des Kühlbereichs 18 kann aufsteigend, annähernd vertikal oder vertikal ausgerichtet sein. Somit kann die Funktion einer Dampfblasenpumpe (Mammutpumpe) erreicht werden. Der sehr geringe Öffnungsdruck des Rückflussverhinderers stromaufwärts des Kühlbereichs 18 ermöglicht ein kontinuierliches Nachströmen von Kühlmittel.

Es kann auch möglich sein, die Vorrichtung zum Kühlen der Abgasnachbehandlungseinrichtung mit einem Kühlmittelreservoir zu ergänzen. Das Kühlmittelreservoir kann bspw. an den Abschnitt 24 angeschlossen sein. Es kann ferner ein Rückflussverhinderer stromabwärts des Kühlbereichs 18 angeordnet werden.

Die vorliegende Offenbarung betrifft auch ein Verfahren zum Kühlen einer Abgasnachbehandlungseinrichtung. Das Verfahren verwendet die hierin offenbarte Vorrichtung 10 zum Kühlen der Abgasnachbehandlungskomponente 12.

Das Verfahren umfasst ein Kühlen der Abgasnachbehandlungseinrichtung 12 durch einen Kühlbereich 18 des Kühlmittelkreislaufs 16, vorzugsweise nachdem eine Kühlmittelpumpe des Kühlmittelkreislaufs 16 abgeschaltet wurde. Das Verfahren umfasst ferner ein zweckmäßig kontinuierliches oder quasi-kontinuierliches Fördern von Kühlmittel durch den Kühlmittelkreislauf 16 in einem Naturumlauf, der durch eine vorzugsweise periodische Volumenänderung (z. B. ohne Phasenübergang) des Kühlmittels in dem Kühlbereich 18, im Abschnitt 24 und/oder im Abschnitt 26 bereits unterhalb von einer Siedetemperatur des Kühlmittels bewirkt wird.

Zweckmäßig kann die Volumenänderung des Kühlmittels eine periodische Volumenänderung sein, mit sich abwechselnder Volumenzunahme im Kühlbereich durch eine Wärmezufuhr von der Abgasnachbehandlungseinrichtung und Volumenabnahme im Abschnitt 26 durch eine Wärmeabfuhr an die Umgebung.

Das Verfahren kann ferner ein Nachströmen von Kühlmittel zum Kühlbereich 18 durch ein Abkühlen und eine damit verbundene Volumenabnahme des Kühlmittels in dem Abschnitt 26 aufweisen.

**Bezugszeichenliste**

10    Vorrichtung zum Kühlen einer Abgasnachbehandlungseinrichtung
12    Abgasnachbehandlungseinrichtung
14    Abgasstrang
16    Kühlmittelkreislauf
18    Kühlbereich
20    Erstes Rückschlagventil (erster Rückflussverhinderer)
22    Zweites Rückschlagventil (zweiter Rückflussverhinderer)
24    Erster Abschnitt
26    Zweiter Abschnitt (Abkühlstrecke)

**Patentansprüche**

1.  Vorrichtung (10) zum Kühlen einer Abgasnachbehandlungseinrichtung (12), vorzugsweise einer Additiv-Dosiereinrichtung, aufweisend:
    einen Kühlmittelkreislauf (16) zum Führen eines Kühlmittels, mit:

    - einem Kühlbereich (18) zur Wärmeübertragung mit der Abgasnachbehandlungseinrichtung (12);
    - einem ersten Rückflussverhinderer (20), der stromaufwärts des Kühlbereichs (18) angeordnet ist;
    - einem zweiten Rückflussverhinderer (22), der stromabwärts des Kühlbereichs (18) angeordnet ist; und
    - einem Abkühlstrecken-Abschnitt zwischen dem Kühlbereich (18) und dem zweiten Rückflussverhinderer (22),

wobei der zweite Rückflussverhinderer (22) so ausgebildet und/oder ausgerichtet ist, dass er bei einer Volumenänderung des Kühlmittels im Kühlbereich (18) öffnet, **dadurch gekennzeichnet, dass** die Volumenänderung unterhalb von einer Siedetemperatur des Kühlmittels stattfindet, vorzugsweise zum Bereitstellen eines kontinuierlichen oder quasi-kontinuierlichen Naturumlaufs des Kühlmittels im Kühlmittelkreislauf (16) unterhalb der Siedetemperatur des Kühlmittels, wobei:

der erste Rückflussverhinderer (20) und/oder der zweite Rückflussverhinderer (22) dazu ausgebildet ist, einen Öffnungsdruck zum Öffnen des Rückflussverhinderers (20, 22) kleiner oder gleich 10 mbar, vorzugsweise kleiner oder gleich 1 mbar, besonders bevorzugt kleiner oder gleich 0,1 mbar oder 0,05 mbar, aufzuweisen; und/oder der erste Rückflussverhinderer (20) und/oder der zweite Rückflussverhinderer (22) dazu ausgebildet ist, einen Öffnungsdruck aufzuweisen, der zum Öffnen des Rückflussverhinderers (20, 22) führt, wenn das Kühlmittel eine Volumenänderung erfährt, die unterhalb von der Siedetemperatur des Kühlmittels stattfindet.

2. Vorrichtung (10) nach Anspruch 1, wobei:
   der erste Rückflussverhinderer (20) ein Rückschlagventil ist und/oder der zweite Rückflussverhinderer (22) ein Rückschlagventil ist und/oder beabstandet zu dem Kühlbereich (18) angeordnet ist.

3. Vorrichtung (10) nach Anspruch 1 oder 2, wobei:
   der erste Rückflussverhinderer (20) und/oder der zweite Rückflussverhinderer (22) dazu ausgebildet ist, bei einer, vorzugsweise geringfügigen, Fluidströmung, die durch eine Volumenänderung des Kühlmittels unterhalb der Siedetemperatur bewirkt wird, offengehalten zu werden.

4. Vorrichtung (10) nach einem der vorherigen Ansprüche, wobei:
   der erste Rückflussverhinderer (20) und/oder der zweite Rückflussverhinderer (22) in einer aufsteigenden, vorzugsweise vertikalen oder annähernd vertikalen, Einbaulage ausgerichtet ist.

5. Vorrichtung (10) nach einem der vorherigen Ansprüche, wobei:
   der erste Rückflussverhinderer (20) und/oder der zweite Rückflussverhinderer (22) einzig oder im Wesentlichen nur durch eine Gewichtskraft eines Verschlusselements des Rückflussverhinderers (20, 22) in einer Schließstellung gehalten ist.

6. Vorrichtung (10) nach einem der vorherigen Ansprüche, wobei:
   der erste Rückflussverhinderer (20) und/oder der zweite Rückflussverhinderer (22) nicht-federbelastet ist.

7. Vorrichtung (10) nach einem der vorherigen Ansprüche, wobei:
   der erste Rückflussverhinderer (20) und/oder der zweite Rückflussverhinderer (22) ein Kugel-Rückschlagventil ist, das vorzugsweise:

   - in einer aufsteigenden, vorzugsweise vertikalen oder annähernd vertikalen, Einbaulage ausgerichtet ist; und/oder
   - nicht-federbelastet ist; und/oder
   - einzig oder im Wesentlichen nur durch eine Gewichtskraft einer Verschlusskugel des Kugel-Rückschlagventils in einer Schließstellung gehalten ist.

8. Vorrichtung (10) nach einem der Ansprüche 1 bis 6, wobei:
   der erste Rückflussverhinderer (20) und/oder der zweite Rückflussverhinderer (22) ein Klappen-Rückschlagventil ist, das vorzugsweise:

   - in einer horizontalen Einbaulage oder in einer annähernd horizontalen Einbaulage ausgerichtet ist; und/oder
   - nicht-federbelastet ist; und/oder
   - einzig oder im Wesentlichen nur durch eine Gewichtskraft einer Rückschlagklappe des Klappen-Rückschlagventils in einer Schließstellung gehalten ist.

9. Vorrichtung (10) nach einem der vorherigen Ansprüche, wobei:
   ein Abschnitt des Kühlmittelkreislaufs (16), vorzugsweise direkt, stromabwärts des Kühlbereichs (18) aufsteigend, annähernd vertikal oder vertikal ausgerichtet ist, vorzugsweise zum Ausbilden einer Dampfblasenpumpe (Mammutpumpe).

**10.** Kraftfahrzeug, vorzugsweise Nutzfahrzeug, aufweisend:

eine Abgasnachbehandlungseinrichtung (12), vorzugsweise eine Additiv-Dosiereinrichtung, und
die Vorrichtung (10) nach einem der vorherigen Ansprüche.

**11.** Verfahren zum Kühlen einer Abgasnachbehandlungseinrichtung (12), vorzugsweise einer Additiv-Dosiereinrichtung, aufweisend:

Kühlen der Abgasnachbehandlungseinrichtung (12) durch einen Kühlbereich (18) eines Kühlmittelkreislaufs (16); und
Fördern von Kühlmittel durch den Kühlmittelkreislauf (16) in einem Naturumlauf, der durch eine Volumenänderung des Kühlmittels in dem Kühlbereich (18) bereits unterhalb von einer Siedetemperatur des Kühlmittels bewirkt wird, vorzugsweise nachdem eine Kühlmittelpumpe des Kühlmittelkreislaufs (16) abgeschaltet wurde, wobei das Verfahren die Vorrichtung (10) nach einem der Ansprüche 1 bis 9 verwendet.

**12.** Verfahren nach Anspruch 11, wobei:
das Fördern kontinuierlich oder quasi-kontinuierlich ist.

**13.** Verfahren nach Anspruch 11 oder Anspruch 12, wobei:
der Naturumlauf zusätzlich durch eine Volumenänderung des Kühlmittels in einem Abschnitt des Kühlmittelkreislaufes (16), vorzugsweise direkt, stromaufwärts des Kühlbereichs (18) und/oder in einem Abschnitt des Kühlmittelkreislaufes (16), vorzugsweise direkt, stromabwärts des Kühlbereichs (18) bewirkt wird, wobei vorzugsweise:

- der Abschnitt des Kühlmittelkreislaufes (16) stromaufwärts des Kühlbereichs (18) durch einen Rückflussverhinderer (20) begrenzt ist; und/oder
- der Abschnitt des Kühlmittelkreislaufes (16) stromabwärts des Kühlbereichs (18) durch einen Rückflussverhinderer (22) begrenzt ist.

**14.** Verfahren nach einem der Ansprüche 11 bis 13, wobei:

die Volumenänderung des Kühlmittels eine periodische Volumenänderung ist, vorzugsweise mit sich abwechselnder Volumenzunahme, bevorzugt im Kühlbereich (18) durch eine Wärmezufuhr von der Abgasnachbehandlungseinrichtung (12), und Volumenabnahme, bevorzugt in einem Abschnitt des Kühlmittelkreislaufs (16) stromabwärts des Kühlbereichs (18) durch eine Wärmeabfuhr an die Umgebung; und/oder
ein Nachströmen von Kühlmittel zum Kühlbereich (18) durch ein Abkühlen und eine damit verbundene Volumenabnahme des Kühlmittels in einem Abschnitt des Kühlmittelkreislaufs (16) stromabwärts des Kühlbereichs (18) bewirkt wird.

## Claims

**1.** A device (10) for cooling an exhaust-gas aftertreatment apparatus (12), preferably an additive metering apparatus, having:
a coolant circuit (16) for conducting a coolant, with:

- a cooling region (18) for heat transfer with the exhaust-gas aftertreatment apparatus (12);
- a first backflow preventer (20), which is arranged upstream of the cooling region (18);
- a second backflow preventer (22), which is arranged downstream of the cooling region (18); and
- a cooling path section of the coolant circuit (16) between the cooling region (18) and the second backflow preventer (22),

wherein the second backflow preventer (22) is configured and/or oriented such that, in the event of a change in volume of the coolant in the cooling region (18) said second backflow preventer (22) opens, **characterized in that** the change in volume takes place below a boiling point of the coolant, preferably in order to provide a continuous or quasi-continuous natural circulation of the coolant in the coolant circuit (16) below the boiling point of the coolant, wherein

the first backflow preventer (20) and/or the second backflow preventer (22) is configured to have an opening pressure for the opening of the backflow preventer (20, 22) of less than or equal to 10 mbar, preferably less than or equal to 1 mbar, particularly preferably less than or equal to 0.1 mbar or 0.05 mbar; and/or
the first backflow preventer (20) and/or the second backflow preventer (22) is configured to have an opening pressure which leads to the opening of the backflow preventer (20, 22) if the coolant undergoes a change in volume that takes place below the boiling point of the coolant.

2. The device (10) as claimed in claim 1, wherein:
the first backflow preventer (20) is a check valve and/or a second backflow preventer (22) is a check valve and/or is arranged spaced apart from the cooling region (18).

3. The device (10) as claimed in claim 1 or 2, wherein:
the first backflow preventer (20) and/or the second backflow preventer (22) is configured to be held open in the presence of a, preferably small, fluid flow caused by a change in volume of the coolant below the boiling point.

4. The device (10) as claimed in one of the preceding claims, wherein:
the first backflow preventer (20) and/or the second backflow preventer (22) is oriented in a rising, preferably vertical or approximately vertical, installation position.

5. The device (10) as claimed in any one of the preceding claims, wherein:
the first backflow preventer (20) and/or the second backflow preventer (22) is held in a closed position solely or substantially only by a weight force of a closure element of the backflow preventer (20, 22).

6. The device (10) as claimed in any one of the preceding claims, wherein:
the first backflow preventer (20) and/or the second backflow preventer (22) is non-spring-loaded.

7. The device (10) as claimed in any one of the preceding claims, wherein:
the first backflow preventer (20) and/or the second backflow preventer (22) is a ball check valve, which is preferably:

- oriented in a rising, preferably vertical or approximately vertical, installation position; and/or
- non-spring-loaded; and/or
- held in a closed position solely or substantially only by a weight force of a closure ball of the ball check valve.

8. The device (10) as claimed in any one of claims 1 to 6, wherein:
the first backflow preventer (20) and/or the second backflow preventer (22) is a flap check valve, which is preferably:

- oriented in a horizontal installation position or in an approximately horizontal installation position; and/or
- non-spring-loaded; and/or
- held in a closed position solely or substantially only by a weight force of a check flap of the flap check valve.

9. The device (10) as claimed in any one of the preceding claims, wherein:
a section of the coolant circuit (16) preferably directly downstream of the cooling region (18) is oriented in a rising, approximately vertical or vertical manner, preferably so as to form a vapor-bubble pump (airlift pump).

10. A motor vehicle, preferably a utility vehicle, having:

an exhaust-gas aftertreatment apparatus (12), preferably an additive metering apparatus, and
the device (10) as claimed in any one of the preceding claims.

11. A method for cooling an exhaust-gas aftertreatment apparatus (12), preferably an additive metering apparatus, comprising:

cooling of the exhaust-gas aftertreatment apparatus (12) by means of a cooling region (18) of a coolant circuit (16); and
conveying of coolant through the coolant circuit (16) in a natural circulation, which is caused by a change in volume of the coolant in the cooling region (18) already below a boiling point of the coolant, preferably after a coolant pump of the coolant circuit (16) has been deactivated,
wherein the method uses the device (10) as claimed in any one of claims 1 to 9.

12. The method as claimed in claim 11, wherein:

the conveyance is continuous or quasi-continuous.

13. The method as claimed in claim 11 or claim 12, wherein:
the natural circulation is additionally caused by a change in volume of the coolant in a section of the coolant circuit (16) preferably directly upstream of the cooling region (18) and/or in a section of the coolant circuit (16) preferably directly downstream of the cooling region (18), wherein preferably:

- the section of the coolant circuit (16) upstream of the cooling region (18) is delimited by a backflow preventer (20); and/or
- the section of the coolant circuit (16) downstream of the cooling region (18) is delimited by a backflow preventer (22).

14. The method as claimed in any one of claims 11 to 13, wherein:

the change in volume of the coolant is a periodic change in volume, preferably with an alternating increase in volume, preferably in the cooling region (18) owing to a supply of heat from the exhaust-gas aftertreatment apparatus (12), and a decrease in volume, preferably in a section of the coolant circuit (16) downstream of the cooling region (18) owing to a dissipation of heat to the environment; and/or
a follow-on flow of coolant to the cooling region (18) is caused by cooling and an associated decrease in volume of the coolant in a section of the coolant circuit (16) downstream of the cooling region (18).

**Revendications**

1. Dispositif (10) de refroidissement d'un module de post-traitement de gaz d'échappement (12), de préférence d'un module de dosage d'additif, ledit dispositif comprenant :

un circuit d'agent de refroidissement (16) destiné à transporter un agent de refroidissement, ledit circuit comprenant :

- une zone de refroidissement (18) destinée au transfert de chaleur vers le module de post-traitement de gaz d'échappement (12) ;
- un premier moyen anti-retour (20) disposé en amont de la zone de refroidissement (18) ;
- un deuxième moyen anti-retour (22) disposé en aval de la zone de refroidissement (18) ; et
- une portion de section de refroidissement entre la zone de refroidissement (18) et le deuxième moyen anti-retour (22),

le deuxième moyen anti-retour (22) étant conçu et/ou orienté de manière à s'ouvrir lorsque le volume d'agent de refroidissement varie dans la zone de refroidissement (18), **caractérisé en ce que** la variation de volume est effectuée au-dessous d'une température d'ébullition de l'agent de refroidissement,
de préférence afin d'assurer une circulation naturelle continue ou quasi continue de l'agent de refroidissement dans le circuit d'agent de refroidissement (16) au-dessous de la température d'ébullition de l'agent de refroidissement :
le premier moyen anti-retour (20) et/ou le deuxième moyen anti-retour (22) étant conçus pour avoir une pression d'ouverture du moyen anti-retour (20, 22) inférieure ou égale à 10 mbar, de préférence inférieure ou égale à 1 mbar, de manière particulièrement préférée inférieure ou égale à 0,1 mbar ou 0,05 mbar ; et/ou le premier moyen anti-retour (20) et/ou le deuxième moyen anti-retour (22) étant conçus pour présenter une pression d'ouverture qui conduit à l'ouverture du moyen anti-retour (20, 22) lorsque l'agent de refroidissement subit une variation de volume qui se produit au-dessous de la température d'ébullition de l'agent de refroidissement.

2. Dispositif (10) selon la revendication 1 :
le premier moyen anti-retour (20) étant un clapet anti-retour et/ou le deuxième moyen anti-retour (22) étant un clapet anti-retour et/ou étant disposé à distance de la zone de refroidissement (18).

3. Dispositif (10) selon la revendication 1 ou 2 :
le premier moyen anti-retour (20) et/ou le deuxième moyen anti-retour (22) étant conçus pour être maintenus ouverts en cas d'écoulement de fluide, de préférence insignifiant, qui est provoqué par une variation du volume du liquide de refroidissement en dessous de la température d'ébullition.

**4.** Dispositif (10) selon l'une des revendications précédentes :
le premier moyen anti-retour (20) et/ou le deuxième moyen anti-retour (22) étant orientés dans une position de montage ascendante, de préférence verticale ou approximativement verticale.

**5.** Dispositif (10) selon l'une des revendications précédentes :
le premier moyen anti-retour (20) et/ou le deuxième moyen anti-retour (22) étant maintenus dans une position fermée uniquement ou sensiblement uniquement par le poids d'un élément de fermeture du moyen anti-retour (20, 22).

**6.** Dispositif (10) selon l'une des revendications précédentes :
le premier moyen anti-retour (20) et/ou le deuxième moyen anti-retour (22) étant non contraints par ressort.

**7.** Dispositif (10) selon l'une des revendications précédentes :
le premier moyen anti-retour (20) et/ou le deuxième moyen anti-retour (22) étant un clapet anti-retour à bille, qui est de préférence :

- orienté dans une position de montage ascendante, de préférence verticale ou approximativement verticale ; et/ou
- non contraint par ressort ; et/ou
- maintenu dans une position fermée uniquement ou sensiblement uniquement par le poids d'une bille de fermeture du clapet anti-retour à bille.

**8.** Dispositif (10) selon l'une des revendications 1 à 6 :
le premier moyen anti-retour (20) et/ou le deuxième moyen anti-retour (22) étant un clapet anti-retour à volet qui est de préférence :

- orienté dans une position de montage horizontale ou dans une position de montage approximativement horizontale ; et/ou
- non contraint par ressort ; et/ou
- maintenu dans une position fermée uniquement ou sensiblement uniquement par le poids d'un volet anti-retour du clapet anti-retour à volet.

**9.** Dispositif (10) selon l'une des revendications précédentes :
une portion du circuit d'agent de refroidissement (16), s'élevant de préférence directement en aval de la zone de refroidissement (18), étant orientée approximativement verticalement ou verticalement, de préférence pour former une pompe à bulles de vapeur (pompe mammouth).

**10.** Véhicule automobile, de préférence véhicule utilitaire, comportant :

un module de post-traitement de gaz d'échappement (12), de préférence un module de dosage d'additifs, et le dispositif (10) selon l'une des revendications précédentes.

**11.** Procédé de refroidissement d'un module de post-traitement de gaz d'échappement (12), de préférence un module de dosage d'additifs, ledit procédé comportant les étapes suivantes :

refroidir le module de post-traitement de gaz d'échappement (12) par le biais d'une zone de refroidissement (18) d'un circuit d'agent de refroidissement (16) ; et
transporter l'agent de refroidissement à travers le circuit d'agent de refroidissement (16) selon une circulation naturelle qui est provoquée par une variation de volume de l'agent de refroidissement dans la zone de refroidissement (18) déjà au-dessous d'une température d'ébullition de l'agent de refroidissement, de préférence après qu'une pompe d'agent de refroidissement du circuit de refroidissement (16) a été désactivée,
le procédé utilisant le dispositif (10) selon l'une des revendications 1 à 9.

**12.** Procédé selon la revendication 11,
le transport étant continu ou quasi-continu.

**13.** Procédé selon la revendication 11 ou la revendication 12,
la circulation naturelle étant en outre provoquée par une variation de volume de l'agent de refroidissement dans une portion du circuit d'agent de refroidissement (16), de préférence directement, en amont de la zone de refroidissement (18) et/ou dans une portion du circuit d'agent de refroidissement (16), de préférence directement, en aval de la zone de refroidissement (18), de préférence :

- la portion du circuit d'agent de refroidissement (16) en amont de la zone de refroidissement (18) étant limitée par un moyen anti-retour (20) ; et/ou
- la portion du circuit d'agent de refroidissement (16) en aval de la zone de refroidissement (18) étant limitée par un moyen anti-retour (22).

14. Procédé selon l'une des revendications 11 à 13,

la variation de volume de l'agent de refroidissement étant une variation de volume périodique, comprenant de préférence une augmentation de volume alternée, de préférence dans la zone de refroidissement (18) due à l'apport de chaleur par le module de post-traitement de gaz d'échappement (12), et une diminution de volume, de préférence dans une portion du circuit d'agent de refroidissement (16) en aval de la zone de refroidissement (18) par dissipation de chaleur vers l'environnement ; et/ou
un écoulement ultérieur d'agent de refroidissement vers la zone de refroidissement (18) étant provoqué par le refroidissement et une diminution associée du volume d'agent de refroidissement dans une portion du circuit d'agent de refroidissement (16) en aval de la zone de refroidissement (18).

FIG. 1

FIG. 2

<u>10</u>

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014221655 A1